# EUROPÄISCHE PATENTANMELDUNG

(11) **EP 0 703 482 A1**
(43) Veröffentlichungstag der Anmeldung: **27.03.1996**
(21) Anmeldenummer: 95110606.1
(22) Anmeldetag: 07.07.1995
(51) Int. Cl.: G02F 1/13, G02F 1/1347

(54) **Anzeigeeinrichtung mit distanziert voreinander angeordneten Zellen**

(30) Priorität: 20.09.1994 DE 4433310
(71) Anmelder: Valeo Borg Instruments Verwaltung GmbH, D-75189 Remchingen (DE)
(72) Erfinder: Behrends, Heinz, D-76332 Bad Herrenalb (DE)
(74) Vertreter: COHAUSZ HASE DAWIDOWICZ & PARTNER

(57) **Zusammenfassung**

Bei einer Anzeigeeinrichtung (11) mit distanziert voreinander angeordneten Gläsern oder sonstigen Darstell-Zellen (13), wie insbesondere im Falle einer Kombination nematischer Flüssigkristall-Drehzellen, wird ein schmaler, gut durchlüfteter Zwischenraum (18) im Zuge des Zusammenbaus der Einrichtung dadurch konstruktiv gewährleistet, daß an den Halterungen (19) für die zuerst montierte Zelle (13.1) dünne, abgewinkelt verlaufende Distanz-Schenkel (19.2) ausgebildet sind, die den Zellen-Rand übergreifen und damit als Abstandsgeber in den späteren Zwischenraum eingreifen, wenn die davor anzuordnende Zelle (13.2) in Montagerichtung gegen diese Distanz-Schenkel angelegt ist.

## Beschreibung

Die Erfindung betrifft eine Anzeigeeinrichtung gemäß dem Oberbegriff des Anspruches 1.

Eine derartige Einrichtung ist etwa aus der DE-PS 34 38 756 als D-STN-Zelle oder Doppel-Drehzelle bekannt. Bei ihr ist die Anzeigeeinrichtung aus zwei beabstandet hintereinander angeordneten nematischen Flüssigkristall-Zellen gruppiert, von denen die eine der Informationsdarbietung und die andere als Kompensationszelle der Kontraststeigerung dient.

Die Erfindung erstreckt sich aber auch auf Anzeigeeinrichtungen, die mit anderen elektrooptischen Effekten arbeiten; und als Zelle kann im Rahmen vorliegender Erfindung auch eine einfache Scheibe, beispielsweise eine Filter- oder Schutz-Scheibe verstanden werden, die zur Vermeidung optischer Störungen durch Newton'sche Ringe auf Abstand gehaltert sein soll.

Entscheidend ist, daß die Erfindung die technische Problemstellung löst, einen definierten und in der Regel möglichst dünnen (unter einem Millimeter messenden) lichten Abstand zwischen voreinander angeordneten Zellen zu gewährleisten, ohne dadurch die Anzahl zu montierender Bauelemente wesentlich zu vergrößern oder den Montageablauf selbst zu sehr zu beeinträchtigen.

Diese Aufgabe wird durch den Aufbau gemaß Patentanspruch 1 gelöst. Hinsichtlich zweckmäßiger Weiterbildungen wird auch auf die Unteransprüche, auf die Zeichnungsbeschreibung und auf deren abschließende Zusammenfassung ausdrücklich verwiesen.

Nach jener Lösung dienen die ohnehin erforderlichen Halterungen für die zuerst montierte Zelle zugleich (nämlich mit dafür nun zusätzlich daran ausgebildeten, abgewinkelten dünnen Schenkeln) als Abstandshalter zur Gewährleistung des Zwischenraumes zur davor dann anzuordnenden Zelle. Infolge des Zusammenbaus des Gehäuses der Anzeigeeinrichtung (beispielsweise im Zuge der Verbindung eines sichtseitigen Blendenrahmens mit einem rückwärtige Lichtkasten) werden die beiden voreinander gehalterten Zellen dann beiderseits gegen die in den Zwischenraum hineinragenden Distanz-Schenkel angedrückt, was durch kleine Federn zum Toleranzausgleich noch elastisch unterstützt werden kann.

Jedenfalls entfällt dadurch das bisher übliche aufwendige Einbringen eines gesonderten dünnen, rahmenförmig umlaufenden Abstandshalters in Form einer ausgeschnitten eingelegten Folie oder einer dick auf eine der Oberflächen zwischen den voneinander zu distanzierenden Zellen aufgetragenen Druckmasse aus Kleb- oder Farbstoff. Außerdem verbleiben nun zwischen den einzelnen auf Abstand nebeneinander angeordneten Distanz-Schenkeln und neben den Federn genügend Öffnungen für einen Luftaustausch zur Umgebung, wodurch auch einer störenden Fleckenbildung infolge Feuchtigkeitsansammlungen im Zwischenraum wirksam entgegnet wird.

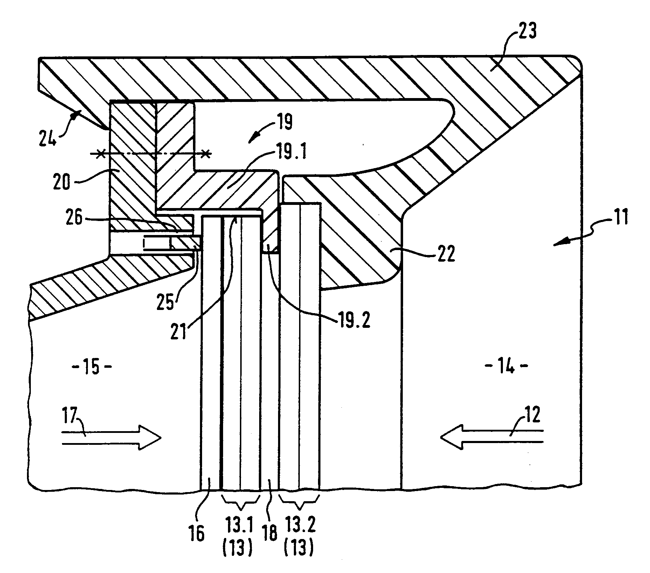

Die einzige Figur der Zeichnung zeigt zur näheren Erläuterung eines bevorzugten Realisierungsbeispieles stark vergrößert in nicht maßstabsgerechter, abgebrochener Längsschnitt-Darstellung eine erfindungsgemäß aufgebaute Anzeigeeinrichtung 11 mit zwei distanziert voreinander angeordneten nematischen Flüssigkristall-Drehzellen 13, von denen nur die Front- und Rück-Scheiben erkennbar sind, nicht die dazwischen eingeschlossenen und mit Flüssigkristall-Material gefüllten dünnen Kammern. Es handelt sich hier um eine (in Betrachtungsrichtung 12) rückwärtig angeordnete Kontrast-Zelle 13.1 hinter einer Informations-Zelle 13.2; wobei diese gegenseitige Anordnung aber auch umgekehrt sein kann.

Die Zeilen 13 liegen am Grunde eines gegen Spiegelungserscheinungen abschirmenden Einblick-Tubus 14, der in Betrachtungsrichtung 12 in die Sichtfläche eines Kraftfahrzeug-Armaturenbrettes eingesenkt ist. Hinter diesem ist ein Lichtkasten 15 angeordnet und von einer folien- oder platten-förmigen Streu- oder Farbscheibe 16 abgedeckt, die unter minimalem Abstand hinter der rückwärtigen Zelle 13.1 gehaltert ist. Um daraus resultierende optische Störungen zu vermeiden, ist die Farbscheibe 16 auf ihrer der Zelle 13.1 zugewandten und an jener anliegenden Oberfläche aufgerauht oder mit Abstandswarzen ausgestattet, damit der definierte Minimalabstand dauerhaft eingehalten bleibt.

Aus dem Lichtkasten 15 heraus wird die Anzeigeeinrichtung 11, der Umgebungsbeleuchtung und Betrachtungsrichtung 12 entgegen, von einer Lichtquelle her in Durchleuchtungsrichtung 17 bestrahlt.

Wichtig für eine farb-stabile und langzeit-konstante Darstellqualität der Anzeigeeinrichtung 11 ist also die Vermeidung von Newton'schen Ringen und von Feuchtigkeitsflecken im diesbezüglich kritischen schmalen Zwischenraum 18 zwischen den beiden Zellen 13.1 - 13.2, die jede etwa doppelt so stark wie der Zwischenraum 18 selbst sind. Die Aufrechterhaltung dieses Zwischenraumes 18 wird nach vorliegender Erfindung im Zuge des Zusammenbaus der Anzeigeeinrichtung 11 durch konstruktive Maßnahmen gewährleistet, ohne dadurch die Montage der Anzeigeeinrichtung 11 wesentlich zu komplizieren.

Das wird mittels balkenförmig-abgewinkelt verlaufender Halterungen 19 erreicht, die quer zur Zeichenebene jeweils nur kurze Längen aufweisen. Die Halterungen 19 sind an einander gegenüberliegenden Seitenwänden 20 des Lichtkasten 15 durch Klebe-, Schnapp- oder Schraub-Verbindungen so befestigt, oder so daran engeformt, daß jede der Halterungen 19 den vorderen Rand der rückwärtigen Zelle 13.1 umfaßt und dabei als Distanzgeber in den Zwischenraum 18 zwischen den Zellen 13 eingreift. Dafür erstreckt sich ein vergleichsweise massiver Längs-Schenkel 19.1 von seiner Befestigung an der Lichtkasten-Seitenwand 20 in Durchleuchtungsrichtung 17 quer zur Berandung 21 der rückwärtigen Zelle 13.1 bis zum Beginn des Zwischenraumes 18, um hier in einen dagegen dünnen (zur Veranschaulichung unrealistisch dick gezeichneten) und etwa rechtwinklig zum ersten Schenkel 19.1 verlaufenden Distanz-Schenkel 19.2 überzugehen. Der regt infolgedessen von der Zellen-Berandung 21 her seitlich etwas in den Zwischenraum 18 hinein. Gegen diesen Distanz-Schenkel 19.2 liegt die vordere Zelle 13.2 in Betrechtungsrichtung 12 an. Diese Zelle 13.2 ist gehaltert und in Betrachtungsrichtung 12 engedrückt von einem am Gehäuse des Tubus 14 angeformten Blenden-Rahmen 22, der sichtseitig vor der vorderen Zelle 13.2 herumläuft. Dieser Rahmen 22 ist Bestandteil des Instrumenten-Gehäuses 23, in dem der Tubus 14 ausgebildet ist. Das Gehäuse 23 ist, etwa durch eine Rast-, Schraub- oder Klemmverbindung 24, mit Fortsätzen an den Seitenwänden 20 des Lichtkastens 15 verspannt. Dadurch werden nach der Montage die beiden Zellen 13 unter Zwischenlage der Distanz-Schenkel 19.2 zur Anzeigeeinrichtung 11 zusammengehalten. Dabei sorgt eine Anzahl von aus der Seitenwand 20 des Lichtkastens 15 in Durchleuchtungsrichtung 17 vorstehenden hebel- oder bogenförmigen Federn 25 durch elastischen Andruck der rückwärtigen Zelle 13.1 gegen den Distanz-Schenkel 19.2 für einen Ausgleich von Fertigungstoleranzen. Die Schlitze 26, in welche die Federn 25 biegeelastisch eingedrückt werden können, und die lichten Abstände zwischen den einander benachbarten Distanz-Schenkeln 19.2, stellen in vorteilhafter Weise Luftaustausch-öffnungen der, wodurch der etwaigen Ausbildung Newton'scher Ringe und Feuchtigkeits-Ansammlungen zusätzlich entgegengewirkt wird.

Zum Zusammenbau der Anzeigeeinrichtung 11 wird der Lichtkasten 15 mit den Halterungen 19 bestückt und dann zunächst die rückwärtigen Zeile 13.1 samt Farbscheibe 16 eingesetzt. Diese kann dafür in die Nut (quer zur Zeichenebene der Skizze) eingeschoben werden, die sich zwischen der Seitenwand 20 und den davon beabstandeten Distanz-Schenkeln 19.2 ergibt, welche einander gegenüberliegend aufeinander zu weisen; oder die Distanz-Schenkel 19.2 werden in Durchleuchtungsrichtung 17 etwas nochgebogen, um die rückwärtigen Zelle 13.1 samt Farbscheibe 16 dann von vorne, also in Betrachtungsrichtung 12, einsetzen zu können. Sodann wird die vordere Zelle 13.2 in Betrachtungsrichtung 12 auf die Distanz-Schenkel 19.2 aufgelegt, womit bereits der Zwischenraum 18 zwischen den Zellen 13 definiert ist, und durch Ansetzen des Gehäuses 23 am Lichtkasten 15 ist der Aufbau der Anzeigeeinrichtung 11 fixiert.

## Patentansprüche

1. Anzeigeeinrichtung (11) mit Flüssigkristall-Zellen (13), die unter Zwischenlage von Abstandshaltern mit schmalem Zwischenraum (18) voreinander angeordnet sind, dadurch gekennzeichnet,
daß als Abstandshalter zwischen die Zellen (13) dünne Distanz-Schenkel (19.2) von winkelförmigen Halterungen (19) eingreifen, deren anderen Schenkel (19.1) quer zum Zwischenraum (18) und zur Berandung (21) einer der Zellen (13) verlaufen und direkt oder indirekt am Gehäuse (23) der Anzeigeeinrichtung (11) befestigt sind.

2. Anzeigeeinrichtung nach Anspruch 1, dadurch gekennzeichnet,
daß die Zellen (13) miteinander unter Zwischenlage der Distanz-Schenkel (19.2) zwischen einem rückwärtigen Lichtkasten (15) und einem sichtseitigen Rahmen (22) mittels des Gehäuses (23) verspannt sind, das mit dem Lichtkasten (15) verbunden ist.

3. Anzeigeeinrichtung nach Anspruch 1 oder 2, dadurch gekennzeichnet,
daß gegen wenigstens eine der Zellen (13) quer zur Erstreckung der Distanz-Schenkel (19.2) Federn (25) andrücken, die am Lichtkasten (15) und/oder am Rahmen (22) befestigt oder ausgebildet sind.

4. Anzeigeeinrichtung nach einem der vorangehenden Ansprüche, dadurch gekennzeichnet,
daß die Halterungen (19) mit ihren massiveren Schenkeln (19.1) bei aufeinander zu weisenden Distanz-Schenkein (19.2) an oder neben der Seitenwand (20) eines Lichtkastens (15) befestigt sind.

5. Anzeigeeinrichtung nach einem der vorangehenden Ansprüche, dadurch gekennzeichnet,
daß eine der Zellen (13) in eine Nut zwischen der Seitenwand (20) des Lichtkastens (15) und den Distanz-Schenkeln (19.2) eingeschoben ist.

6. Anzeigeeinrichtung nach einem der Ansprüche 1 bis 4, dadurch gekennzeichnet,
daß eine der Zellen (13) bei vorgeklappten Distanz-Schenkeln (19.2) vor den Seitenwänden (20) des Lichtkastens (15) eingesprengt ist.

7. Anzeigeeinrichtung nach einem der vorangehenden Ansprüche, dadurch gekennzeichnet,
daß sie zwei nematische Dreh-Zellen (13) aufweist, von denen die eine als Kontrast-Zelle (13.1) und die andere als Informations-Zelle (13.2) ausgelegt ist.
